Europäisches Patentamt

European Patent Office

Office européen des brevets

(19)

(11) Publication number: **0 346 514**

**A1**

(12) **EUROPEAN PATENT APPLICATION**

(21) Application number: **88109566.5**

(22) Date of filing: **15.06.88**

(51) Int. Cl.⁴: **A23L 1/025 , A23L 2/22 , A23L 2/24 , A23K 1/18**

(43) Date of publication of application:
**20.12.89 Bulletin 89/51**

(84) Designated Contracting States:
**AT BE CH DE ES FR GB GR IT LI NL SE**

(71) Applicant: **Wojcik, Ryszard**
**Habdzin 72D**
**05-520 Konstancin-Jeziorna(PL)**

Applicant: **Wojcik, Anna**
**Habdzin 72D**
**05-520 Konstancin-Jeziorna(PL)**

(72) Inventor: **Wojcik, Ryszard**
**Habdzin 72D**
**05-520 Konstancin-Jeziorna(PL)**
Inventor: **Wojcik, Anna**
**Habdzin 72D**
**05-520 Konstancin-Jeziorna(PL)**

(74) Representative: **Schrimpf, Robert et al**
**Cabinet Regimbeau 26, Avenue Kléber**
**F-75116 Paris(FR)**

(54) **Method of feed activation, especially for farm animals.**

(57) Method of activation of feed, particularly that for farm animals, consisting in exposing that feed before giving it to animals, to electromagnetic radiation of 300-800 nanometer wavelength, mainly 450-800 nanometer waves. As generator for such a radiation there may be used a high-pressure lamp, e.g. sodium one of 250-400 W power and a light flux of 22,500 - 44,000 lumens provided with a transparent diaphragm with a spectral characteristics of 450-800 nanometers. This diaphragm is preferably made of inserts of orange and/or red glass situated in such a way that they cover at least 10 per cent of the total outlet area of reflector. Irradiation leads to a photon emission of feed components, which has physiological and psychosomatic significance.

EP 0 346 514 A1

## METHOD OF FEED ACTIVATION, ESPECIALLY FOR FARM ANIMALS

An object of the invention is a method of feed activation, especially for farm animals, e.g. poultry, on the way of electromagnetic radiation, produced by generators of artificial light.

Photobiological meaning of electromagnetic radiation, which makes the light, is fixed by effects, expressed directly in vital functions. A lack of light causes different kinds and different degrees pathological states, as for example distempers of nervous system balance, a reduction of immunologic protective system, deviations in matabolic and enzymatic processes, diminution of nervous and muscle central system tension etc... In general, natural solar field regulates cyclic vital activity, appearing among other things in a rhythm of the brain work and, when this field dose is to small or it is short totally, arise even changes in the reproduction. On the above convinces known fact, that eskimo women during polar nights have no menstruation and they do not become pregnant, while children are born in these conditions on the average every four years, and they have to receive breast-feeding up to they are six years old.

The meaning of natural radiation and thus solar field and provoked by it set of mutually influencing electrostatic, electric and magnetic fields is very impor tant also in farm animals breeding, poultry in particular, which are exceptionally sensible on the night influences. It is well known that, by way of example, hens assembled in relatively big quantity on a small space, have to be in the dark, because more intense light provokes states of excitement, and even histeric states up to a self-annihilation. Thus, hen-houses are illuminated artifically with resistant electric bulbs, usually ceilingly arranged. Known is also from Polish patent description N° 132570 illumination of rooms for brollers feeding by means of small power fluorescent tubes or with a range of miniature electric bulbs, which are placed over installations for feeding and for drinking on a height of 10-20 cm. The above gives a good visibility of the feed and water in a general half-dark, and it does not increase the birds activity.

Thus, until now poultry-breeder's practice and also in another systems of farm animals-breeding in industrial scale, the attention was drawn on the illumination like a factor of visual impressions and in consequence of their psychical receipt. In the meantime it became evident, negating no this aspect, one ought examine parallel another consequences of electromagnetic radiation like natural, artificial light and in their compositions. On the base of long-lasting experiments and observations, supported with laboratory examinations, it was stated, that profitable activity of magnetic fields must not refer only directly to the surface of a body or eyes, but also to the intermediary of a feed. Using appropriate technical means by the feed irradiation, this is possible lead to an appearance of excited metastabile states having a character of photoluminescence. Photon emission can be caused as well by natural solar light as by properly selected artificial white light, modified by a use of orange and/or by red filter.

The essence of the invention consists in the feed radiation before its consumption, e.g. by the poultry, with electromagnetic radiation having a length of waves 300-800 nanometres, with a supremacy of 450-800 nanometres. Electromagnetic radiation, with which according to the invention one acts on the feed, is generated by high-pressure lamp, by way of exemple sodium one, 250-400 W and luminous stream 22.500-44.000 lumens. In such lamp front part, before the filament a transparent diaphragm of spectrum characteristic 450-800 nanometres is placed. This is advantageous, when the diaphragm is made of inserts made with orange and/or red glass, covering at least 10 % of the reflector outer, outlet surface, placed under angle 30-60° in relation to the filament perpendicular axis. In general such generator location is free, on condition however, that direct rays from the filament, rays reflected from the reflector sides and rays modified by the diaphragm, fall on the feed after being mixed.

In these conditions, not all nutritive elements are however submitted to be excited in the same degree. By way of example, in typical feed for the poultry, relatively the most strong photon emission present iodine-bromine salts and phosphates. In case of the feed administered to hens, after its activation with such radiation, one can observe, that the hens natural resistance against infections was increased, their general form get better and came also an increase of muscular mass and egg laying.

The object of the invention is illustrated in an example of execution in relation to the poultry, as the most characteristic kind of farm animals, but this example does not limit the invention scope of use.

Example. In enclosed part, making a half of poultry-house 50 m. long, 12 m. wide and 3 m. high, equiped with open feed-path with through feeders, in equal distances, on vertical stands, are installed six high-pressure sodium lamps with filaments WLS 400. The filament is fixed in a reflector with semicircular mirror reflector, terminated with window-pane. Before this window-pane are placed 5 strips 4.5 cm wide, made with glass metallurgically coloured with selenium, under angle 40°, which makes a screen covering 20 % of the window-plane surface. Lamps are placed in a distance of 4 m. from feed-path with such deviation to direct rays, reflected from the reflector and deflected by the screen from the plates, after being mixed, like resultant light, might fall on the feed-path. This radiation electromagnetic energy creates the feed excited states, which controlled with AMINCO spectrofluorometer of Messrs. Bauman correspond to a frequency distant from the frequency of exciting radiation in both directions, i.e. when the radiation is 500-650 nanometres an excitation in the scope of 250-800 nanometres is obtained. On the diagram more than the second harmonic is registered, which proves, that one emission causes cyclically successive emissions. Within six-month period the flock of hens RX crosses, in a quantity of 3000 pieces which were in enclosed area with the feed radiation, compared with control flock in the same quantity, but in poultry-house second part and unchanged conditions, presents perceptible differences. They are expressed by more than 5 % smaller consumption of the feed, 4 % decrease of natural death, better musculature and 5 % increase of egg laying yield.

## Claims

1. Method of feed activation, especially for farm animals, on the way of electromagnetic radiation, characterized in that, before the consumption the feed is submitted to the activity of electromagnetic radiation of waves having the length of 300-800 nanometres, mainly 450-800 nanometres.

2. Method according to claim 1, characterized in that, electromagnetic radiation, with which one acts on the feed, is generated by an artificial source of light, especially by high-pressure lamp, such as sodium one of power 250-400 W and luminous stream of 22.500-44.000 lumens, equiped with transparent diaphragm of spectrum characteristic 450-800 nanometres.

3. Method according to the claim 1 and 2, characterized in that, the diaphragm is made of inserts, advantageously made with orange and/or red glass, covering at least 10 % of the reflector outer surface, placed under angle 30-60° in relation to the filament perpendicular axis.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 891 353 (SIEMENS-SCHUCKERT WERKE AG) <br> * claim 1 * <br> --- | 1 | A 23 L   1/025 <br> A 23 L   2/22 <br> A 23 L   2/24 <br> A 23 K   1/18 |
| A | US-A-4 695 472 (J.E. DUNN et al.) <br> * abstract; claims 1 - 4 * <br> --- | 1 | |
| A | DE-A-3 411 738 (W. RICHTER) <br> * claim 1 - 9 * <br> ----- | 1 | |

TECHNICAL FIELDS SEARCHED (Int. Cl.4)

A 23 L   1/00
A 23 L   2/00
A 23 K   1/00

The present search report has been drawn up for all claims

| Place of search | Date of completion of the search | Examiner |
|---|---|---|
| BERLIN | 12-01-1989 | SCHULTZE D |